# EUROPEAN PATENT APPLICATION

(11) **EP 2 871 155 A1**
(43) Date of publication of application: **13.05.2015**
(21) Application number: 13817417.2
(22) Date of filing: 01.07.2013
(51) Int. Cl.: C01B 33/03, C01B 33/035

(54) **METHOD FOR PRODUCING POLYSILICON**

(30) Priority: 09.07.2012 JP 2012153809
(71) Applicant: Tokuyama Corporation, Shunan-shi, Yamaguchi 745-8648 (JP)
(72) Inventor: SAKIDA, Manabu, Shunan-shi Yamaguchi 745-8648 (JP); WAKAMATSU, Satoru, Shunan-shi Yamaguchi 745-8648 (JP); YOSHIMATSU, Nobuaki, Shunan-shi Yamaguchi 745-8648 (JP)
(74) Representative: Schlief, Thomas P.
(86) International application number: PCT/JP2013/068040
(87) International publication number: WO 2014/010457

(57) **Abstract**

An object of the present invention is to recover heat effectively from high-temperature exhaust gas generated from a polysilicon deposition step and also to improve the production efficiency by reducing the adhesion and residues of silicon fine powders and polymers in the pipes and device, improving the recovery efficiency of the unreacted raw material gas and the like, lowering the washing frequency, and making possible a long-term continuous operation.

There is provided a method for producing polysilicon comprising a deposition step for depositing polysilicon from raw material gas including chlorosilanes, and a heat recovery step of supplying exhaust gas generated from the deposition step in a boiler type heat recovery device provided with an exhaust gas pipe and then recovering heat, wherein a gas temperature at an exhaust gas pipe outlet of the boiler type heat recovery device is set to 200°C or more, and an exhaust gas flow rate at the exhaust gas pipe outlet in the boiler type heat recovery device is adjusted to 10m/second or higher.

## Description

### TECHNICAL FIELD

The present invention relates to a method for producing polysilicon. More specifically, it relates to a method for producing polysilicon, which is capable of contributing to a reduction of production cost, comprising a step of effectively recovering heat from high-temperature exhaust gas generated from a polysilicon deposition step, and further, as necessary, comprising a step of recovering unreacted raw material gas.

### BACKGROUND ART

As a method for producing polysilicon (also referred to as polycrystalline silicon), the Siemens method, the VLD method and the like are known. As for the Siemens method, a silicon core wire arranged in a bell-jar type reaction vessel are heated to a silicon deposition temperature by current passages, gas of a silane compound such as trichlorosilane (SiHCl₃) or monosilane (SiH₄) and hydrogen are supplied therein so that polycrystalline silicon is deposited on the silicon core wire by the chemical vapor-phase deposition method to obtain high-purity polycrystalline silicon rods. Further, as for the VLD method, a tubular reaction vessel made of isotropic graphite is heated by high-frequency heating means, chlorosilanes and hydrogen are supplied therein as a raw material so that polysilicon is deposited on the internal wall of the reaction vessel. In the VLD method, as with the Siemens method, the polysilicon is deposited by the chemical vapor-phase deposition method.

In the above methods, exhaust gas, including unreacted raw material gas such as unreacted silane compound and hydrogen, low polymers such as dimers and trimers of the silane compound (also referred to as "polymer" in this technical field) and also silicon fine powders, is generated.

Here, the polymers (Si_{X}H_{Y}Cl_{Z}) specifically include Si₂HCl₅, Si₂H₂Cl₄, Si₂Cl₆ and the like, and those are substances having a higher boiling point than SiCl₄ (silicon tetrachloride) and existing as high-viscosity liquid at low temperature. Further, condensed misty fine particles are referred to as mist. Such polymers or mists deposit and adhere to the inside of a pipe, and thereby the exhaust gas may be inhibited from exhausting. Further, when the polymers adhering and remaining to the inside of the pipe is washed out, it may cause an ignition of polymers in the air.

For the methods of recovering the unreacted raw material gas from the exhaust gas and reducing generation of mists including polymers which makes the exhaust gas processing difficult, various initiatives have been proposed.

Patent Document 1 (Japanese Unexamined Patent Application Publication No. 2010-150131) discloses that when the unreacted raw material gas is recovered from the exhaust gas generated during the production of polysilicon, the exhaust gas flow rate flowing in a heat exchanger is set to 4m/second to 7m/second in order to inhibit generation of mists that causing failures of compressor.

Patent Document 2 (Japanese Unexamined Patent Application Publication No. 2008-266127) discloses that the reaction exhaust gas including chlorosilanes with a temperature of 700°C to 1500°C generated by a reducing reaction of the chlorosilanes and hydrogen, is maintained at a temperature of 700°C or more for more than 2 seconds and thereafter cooled to 350°C or less by the heat exchanger in order to inhibit generation of mists.

### PRIOR ART DOCUMENTS

### PATENT DOCUMENTS

Patent Document 1: Japanese Unexamined Patent Application Publication No. 2010-150131.
Patent Document 2: Japanese Unexamined Patent Application Publication No. 2008-266127.

### SUMMARY OF THE INVENTION

### PROBLEMS TO BE SOLVED BY THE INVENTION

In Patent Document 1, when the high-temperature exhaust gas is cooled by the heat exchanger, by restricting the exhaust gas flow rate flowing in the heat exchanger, the polymers included in the exhaust gas is reliably condensed in the heat exchanger to cause liquid droplets. By liquefying the polymers in the heat exchanger, it prevents inclusion of polymers into the compressor. Specifically, with this method, the polymers inevitably adhere to the inside of the heat exchanger. If the silicon fine powders are included in the exhaust gas, adhesion and accumulation of polymers in the heat exchanger is accelerated. Further, in a horizontal type heat exchanger, it is difficult to exhaust the polymers, and therefore the polymers tend to be accumulated in the heat exchanger. As a result, the heat exchanger requires frequent washing and thereby production efficiency decreases. For this reason, before the exhaust gas is introduced in the heat exchanger, an apparatus for separating the silicon fine powders is additionally required. This apparatus is generally a filter apparatus, and the exhaust gas temperature needs to be decreased before introducing the apparatus, depending on the heat resistance temperature of the filter apparatus.

In Patent Document 2, the exhaust gas is maintained at a temperature of 700°C or more for more than 2 seconds before it is supplied in the heat exchanger and thereafter is cooled to 350°C or less in the heat exchanger, with the result that generation of mists is inhibited. However, due to a small amount of mists and the silicon fine powders included in the exhaust gas, it causes generation of localized liquid pools and also adhesion and residues of polymers in the heat exchanger when the operation is performed for a long time.

Further, the above both Patent Documents 1 and 2 do not describe anything about the heat recovery from the high-temperature exhaust gas.

Therefore, an object of the present invention is to recover heat effectively from high-temperature exhaust gas generated from a polysilicon deposition step. Further, an object of the present invention is also to improve the production efficiency by reducing the adhesion and residues of silicon fine powders and polymers in the pipes and device, improving the recovery efficiency of the unreacted raw material gas and the like, lowering the washing frequency, and making possible a long-term continuous operation.

### MEANS FOR SOLVING THE PROBLEM

The present invention capable of achieving the above objects includes the following features:
(1) A method for producing polysilicon comprising a deposition step for depositing polysilicon from raw material gas including chlorosilanes, and a heat recovery step of supplying exhaust gas generated from the deposition step in a boiler type heat recovery device provided with an exhaust gas pipe and then recovering heat, wherein
   a gas temperature at an exhaust gas pipe outlet of the boiler type heat recovery device is set to 200°C or more, and an exhaust gas flow rate at the exhaust gas pipe outlet in the boiler type heat recovery device is adjusted to 10m/second or higher.
(2) The method for producing polysilicon as set forth in the above (1) comprising an exhaust gas cooling step for cooling the exhaust gas after the heat recovery step by contact with liquid chlorosilane.
(3) The method for producing polysilicon as set forth in the above (1) or (2) comprising a step of recovering unreacted raw material gas from the exhaust gas after the exhaust gas cooling step and then supplying it to the deposition step.
(4) The method for producing polysilicon as set forth in the above (2) comprising a step of recovering the unreacted raw material gas from the liquid chlorosilane in the exhaust gas cooling step and then supplying it to the deposition step.
(5) The method for producing polysilicon as set forth in any one of the above (1) to (4), wherein in a pipe for introducing the exhaust gas generated from the deposition step to the heat recovery step, a straight tube type gas introduction pipe is installed before the boiler type heat recovery device, and the ratio (L:D) of a length L and an inner diameter D of the gas introduction pipe is 1:1 to 5:1.
(6) The method for producing polysilicon as set forth in the above (1) to (5), wherein the ratio (A:B) of a cross-sectional area A of gas flow passage of the exhaust gas pipe in the boiler type heat recovery device and a cross-sectional area B of gas flow passage of the gas introduction pipe installed before the boiler type heat recovery device is 1:1.5 to 1:10.
(7) The method for producing polysilicon as set forth in any one of the above (1) to (6), wherein the deposition step is a step for depositing the polysilicon from the raw material gas including chlorosilanes on an internal wall of a tubular reaction vessel, and is further followed by a melting step in which a temperature of the tubular reaction vessel is raised to the melting point or more of silicon to melt a part or all of the deposited silicon and thereby the silicon is dropped and recovered, and the deposition step and the melting step are repeatedly performed.
(8) The method for producing polysilicon as set forth in the above (7), wherein a plurality of the boiler type heat recovery devices having a different cross-sectional area of gas flow passage is arranged in a line, and the exhaust gas exhausted from the deposition step and the melting step is supplied into respective separate boiler type heat recovery devices.

### EFFECTS OF THE INVENTION

In the present invention, the gas temperature at the exhaust gas outlet of the boiler type heat recovery device is set to 200°C or more in order to convert the polymers to a gaseous state in the heat recovery device, and thereby generation of mists is inhibited. With this, mists and liquid pools do not remain in the heat recovery device and are exhausted together with the exhaust gas, and it enables a continuous operation of the apparatus for producing polysilicon.

Further, by adopting the boiler type heat recovery device, the surface temperature of the heat recovery device that contacting with the exhaust gas increases, and thereby the liquid pools are hardly caused in the heat recovery device. Furthermore, the recovered heat can be used as energy and it is industrially advantageous.

Further, by setting the exhaust gas flow rate at the exhaust gas pipe outlet in the boiler type heat recovery device to 10m/second or higher, even if mists containing silicon fine powders and polymers generate, the mists are easily carried away by the flow rate, thereby mists do not remain in the heat recovery device and further the heat recovery efficiency improves as well.

Although the exhaust gas after flowing in the boiler type heat recovery device includes mists containing silicon fine powders and polymers, such mists are also completely recovered by the cooling step (quench step). Therefore, failure factors of the compressor and the like are also removed and it enables a long-term continuous operation.

### BRIEF DESCRIPTION OF DRAWINGS

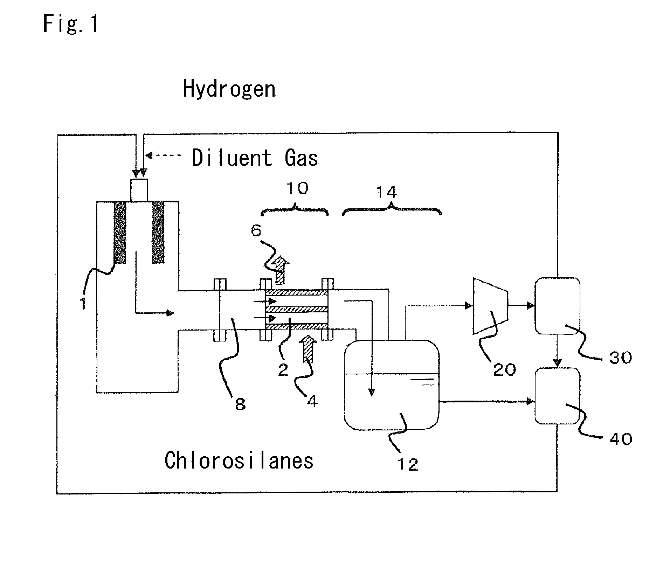

- **FIG. 1**: is a schematic flow diagram of a process of the invention.

### DESCRIPTION OF THE PREFERRED EMBODIMENTS

The method for producing polysilicon according to the present invention comprises a deposition step for depositing polysilicon from the raw material gas including chlorosilanes and a heat recovery step of introducing the exhaust gas generated from the deposition step into the boiler type heat recovery device. Further, after the heat recovery step, it is preferable to include an exhaust gas cooling step of recovering the unreacted chlorosilanes, polymers and silicon fine powders included in the exhaust gas. Further, it is preferable to include a step of recovering the unreacted raw material gas from the exhaust gas after the exhaust gas cooling step, and furthermore, it is preferable to include a step of supplying the recovered unreacted raw material gas to the deposition step.

### (Deposition Step)

The deposition step for depositing polysilicon is not particularly limited, and conventionally adopted methods such as the Siemens method and the VLD method are applied.

For the Siemens method, a silicon core wire arranged in a bell jar is heated by current passage so that it is 900 to 1250°C and the raw material gas including chlorosilanes and hydrogen is supplied therein so that polysilicon is deposited on the silicon core wire to obtain polysilicon rods. Further, for the VLD method, a tubular reaction vessel made of carbon preferably composed of isotropic graphite is heated by high-frequency heating means so that the temperature thereof is 1200°C or more, preferably approximately 1300°C to 1700°C, and the raw material gas including chlorosilanes and hydrogen is supplied therein so that polysilicon is deposited on the internal wall of the reaction vessel. After that, the deposited polysilicon is melted, and thereby the silicon is dropped from the reaction vessel and is recovered. FIG. 1 shows a simplified configuration of the apparatus for producing polysilicon by the VLD method with a tubular reaction vessel 1.

For the deposition and melting of silicon by the above VLD method, for example, as indicated in Patent No, 4064918, it is preferable that the deposition step wherein polysilicon is deposited in the tubular reaction vessel made of carbon at a temperature below the melting point of silicon is performed, and thereafter followed by a step wherein the temperature of the tubular reaction vessel is raised to the melting point or more of silicon to melt a part or all of the deposited silicon and thereby the silicon is dropped and recovered (hereinafter referred to as "melting step"). Further, such deposition step and melting step are preferably repeatedly performed to produce silicon.

Further, although there are a variety of different opinions on the melting point of silicon, it is generally 1410°C to 1430°C. Furthermore, the temperature of the tubular reaction vessel in the melting step is generally 1430°C to1700°C.

Further, in the embodiment wherein the deposition step and the melting step of the VLD method are alternately performed, when performing the melting step, there is no need to deposite the polysilicon and it is preferable to reduce the supply amount of chlorosilanes and hydrogen from the aspect of energy use. Particularly, when performing the melting step, it is preferable to terminate the supply of chlorosilane and also to reduce the supply amount of hydrogen to 0 to 30%, more preferably to 0 to 10% with respect to that of the deposition step. Furthermore, it is preferable to inhibit generation of polymers and silicon fine powders by additionally flowing diluent gas such as hydrogen, nitrogen and argon to promptly make the concentration of chlorosilanes in the tubular reaction vessel to 0.01% or less.

The chlorosilanes supplied in the reaction vessel includes tetrachlorosilane, trichlorosilane, dichlorosilane, monochlorosilane and the like, and generally, a trichlorosilane gas is preferably used. Further, as hydrogen gas, high purity hydrogen gas with a purity grade of 99.99% or more may be used, or recycling gas (hereinafter referred to as circulating gas) obtained by separating and purifying the hydrogen included in the exhaust gas as illustrated in FIG. 1 may be used. Although the hydrogen concentration in the circulating gas is not particularly specified, it is generally 90 to 99 mol%.

Further, the reaction vessel may be plural, and in this case, a reaction vessel by the Siemens method and a reaction vessel by the VLD method may be mixed. The exhaust gas generated from these reaction vessels is introduced into the boiler type heat recovery device which will be described later.

The gas exhausted from the deposition step includes unreacted raw material gas such as unreacted chlorosilanes and hydrogen, low polymers such as dimers and trimers of silane compound (polymers) and also silicon fine powders. For the polymer composition in the exhaust gas, although it differs depending on the operation conditions such as a temperature, by suppressing the amount of by-products thereof as much as possible, it enables to inhibit generation of mists caused by a condensation of polymers which will be described later. Therefore, the polymer composition in the exhaust gas is generally 0.001 to 0.1 mol%, preferably 0.001 to 0.01 mol%. Further, when the silicon is deposited at a temperature of 1200°C or more, relatively large amount of silicon fine powders are included in the exhaust gas. Here, the silicon fine powders indicate silicon particles having a particle diameter of approximately 0.01 to 1µm. Further, the exhaust gas temperature is generally approximately 700°C to 1200°C in the case of the VLD method, and other inclusions except for the silicon fine powders exist in a gaseous state.

Here, for the polymers and the silicon fine powders included in the exhaust gas exhausted from the deposition step, it is preferable to suppress them before introducing the exhaust gas to the heat recovery step.

Specifically, the polymers may be diluted by additionally supplying hydrogen and then mixing together before the heat recovery step. Further, it is preferable to reduce the silicon fine powders by supplying hydrogen chloride or chlorosilanes as a substance reacting with the silicon fine powders and then mixing together in order to cause a reaction with the silicon fine powders. Further, it is more preferable to reduce the silicon fine powders by supplying tetrachlorosilane as chlorosilanes in order to react the silicon fine powders included in the exhaust gas.

In the present invention, it is an object to effectively recover the heat and unreacted raw material gas from the exhaust gas. For the VLD method, the temperature of the generated exhaust gas is higher than that of the Siemens method. With this, it is extremely important to recover the heat energy from the exhaust gas in the VLD method, and the present invention is particularly preferably applied in the exhaust gas generated by the VLD method.

### (Heat Recovery Step)

The exhaust gas generated from the deposition step and the melting step is introduced into the boiler type heat recovery device 10. Here, the temperature of the exhaust gas is high and the temperature of the whole introduction pipe increases as well, therefore it is general to provide a cooling means such as a water cooling jacket and the like. However, when the exhaust gas is cooled by a cooling wall surface, the aforementioned mists might generate. In order to prevent this, structures and means may be applied between the cooling step and the exhaust gas for thermal isolation (heat insulation). As a heat insulating structure, for example, a structure in which carbon materials are provided to the internal wall of the pipe and the like is exemplified. When the carbon materials are provided to the internal wall, it is preferable to interpose heat insulating materials such as fibrous carbon and fibrous silica between the carbon materials and the internal wall surface. Further, in order to maintain the exhaust gas at a predetermined temperature or higher, the exhaust gas may be introduced into the boiler type heat recovery device after adjusting the exhaust gas temperature by a preliminary heating device (not illustrated). Generally, when the exhaust gas temperature is below 100°C, mists might generate due to a condensation of polymers and adhere to the inside of the pipe.

In the pipe for introducing the exhaust gas to the heat recovery step, a straight tube type gas introduction pipe 8 is preferably installed before the boiler type heat recovery device. By installing the straight tube type gas introduction pipe 8, the gas flow toward the boiler type heat recovery device is rectified and the gas is uniformly supplied in the exhaust gas pipe.

Here, although an inner diameter of the gas introduction pipe 8 is not limited at all, the length thereof is set so that the rectifying effect is produced, and it is not industrially preferable to set the length unnecessarily long. Therefore, the ratio (L:D) of the length L and the inner diameter D of the gas introduction pipe 8 is 1:1 to 10:1, more preferably, 1:1 to 5:1, particularly preferably 1:1 to 3:1.

Further, in order to protect the gas introduction pipe, although lining may be carried out therein by using carbon and the like, the inner diameter of the lining corresponds to that of the gas introduction pipe 8. Further, materials for the gas introduction pipe may be heat-resistant materials which are resistant to chlorosilane included in the exhaust gas, and for example, common materials such as stainless, carbon steel and the like can be used. Further, as necessary, the gas introduction pipe may have a jacket structure so that heating and cooling can be performed.

The boiler type heat recovery device 10, as illustrated in FIG. 1, is provided with the exhaust gas pipe 2 where the exhaust gas flows, and appropriate cooling medium such as water or warm water is brought into contact with the surface of the exhaust gas pipe 2 where the high-temperature exhaust gas flows in order to recover the energy as steam. This boiler type heat recovery device is sometimes simply referred to as a "boiler".

At the inlet and outlet of the boiler type heat recovery device 10, it is preferable to provide a temperature measuring device, a flow meter, and a pressure meter so that the inlet temperature and outlet temperature of the exhaust gas, gas flow rate, and pressure can be monitored.

Further, by confirming a tendency of the pressure difference between before and after the boiler type heat recovery device 10, it enables to figure out the accumulation state of mists and silicon fine powders inside of the exhaust gas pipe.

Further, the boiler type heat recovery device 10 comprises a cooling medium supply port 4 for supplying a cooling medium such as water or warm water and also a steam outlet 6 for exhausting the generated steam. The cooling medium supplied from the cooling medium supply port 4 is brought into contact with the exhaust gas pipe 2, and then is heated and converted into steam. After that, it is exhausted from the steam outlet 6.

The exhaust gas in the exhaust gas pipe 2 is cooled by transferring the heat toward the exhaust gas pipe 2, with the result that the exhaust gas flow rate decreases in the rear half part of the exhaust gas pipe. Therefore, when the exhaust gas flow rate at the outlet of the exhaust gas pipe 2 is 10m/second or higher, it brings about an effect for removing mists containing silicon fine powders and polymers.

Further, if the exhaust gas flow rate is significantly increased, erosion might be caused on the exhaust gas pipe 2 due to the silicon fine powders. Therefore, for the exhaust gas flow rate at the outlet of the exhaust gas pipe 2, it is preferable to set it to 10 to 30m/second, more preferably 12 to 20m/second.

By setting the exhaust gas flow rate at the outlet of the exhaust gas pipe 2 to relatively high as above, even if mists containing silicon fine powders and polymers generate in the deposition step and the melting step, the mists are easily carried away by the flow rate and do not remain in the heat recovery device, and further the heat recovery efficiency improves as well.

For the exhaust gas flow rate at the outlet of the exhaust gas pipe 2 in the boiler type heat recovery device, it is appropriately determined depending on the gas amount introduced from the deposition step and the melting step to the heat recovery step, the cross-sectional area of gas flow passage of the exhaust gas pipe 2, the outlet gas temperature of the exhaust gas pipe 2, and the gas pressure at the outlet of the boiler type heat recovery device.

For the gas temperature at the outlet of the exhaust gas pipe 2 of the boiler type heat recovery device, if there is a plurality of the exhaust gas pipes, the gas temperature at each exhaust gas pipe outlet is respectively measured to obtain the average temperature. More easily, the gas temperature at the outlet of the boiler type heat recovery device may be used.

Further, the cross-sectional area of gas flow passage of the exhaust gas pipe 2 can be obtained by multiplying respective cross-sectional area of the exhaust gas pipe 2 in the boiler heat recovery device by the number of pipes "n".

Although the inner diameter of the exhaust gas pipe 2 is not limited at all, by setting it in the range of 15 to 75mm, the boiler type heat recovery device can be designed in a standard size. Further, in the same boiler type heat recovery device, pipes having a different inner diameter may be combined as long as the inner diameter is within the above range.

For the outer diameter of the exhaust gas pipe 2, it is preferable to set it to the minimum thickness by considering a mechanical strength which is required depending on a design temperature, a design pressure, and an inner diameter and also a thermal strength capable of enduring the temperature change and the heat quantity change on the heat transfer surface of the exhaust gas pipe 2. Industrially, the outer diameter of the exhaust gas pipe 2 is preferably 2 to 10mm, more preferably 3 to 8mm.

Further, by making the cross-sectional area of gas flow passage of the exhaust gas pipe 2 smaller than that of the gas introduction pipe 8, nonuniformity of the gas amount flowing in the exhaust gas pipe 2 hardly occurs and it is desirable. However, when the cross-sectional area of gas flow passage is reduced, the heat transfer area of the boiler type heat recovery device decreases. Therefore, when the cross-sectional area of gas flow passage of the exhaust gas pipe 2 in the boiler type heat recovery device is expressed by A and the cross-sectional area of gas flow passage of the gas introduction pipe 8 is expressed by B, the area ratio of A: B is preferably 1:1.5 to 1:10, more preferably 1:2 to 1:6, particularly preferably 1:3 to 1:5.

For materials of the exhaust gas pipe 2, any heat-resistant materials having a high thermal conductivity and exhibiting resistance to chlorosilane included in the exhaust gas is allowed, and for example, common materials such as stainless and carbon steel can be used.

The exhaust gas pipe 2 may have a straight tubular shape as illustrated, and the inner diameter thereof may be increased, decreased or bent in a longitudinal direction. However, if the pipe is bent, deflection of the exhaust gas flow is caused and thereby the silicon fine powders tend to be accumulated. Considering that, the exhaust gas pipe 2 preferably has a straight tubular shape.

For the number of the exhaust gas pipes 2, it may be determined by calculating the numbers capable of achieving the predetermined flow rate and the predetermined heat recovery amount which will be described later with the specified inner diameter. Further, the total length of each exhaust gas pipe can be obtained by dividing a necessary heat transfer area [m²] by the product of a circumference length L [m] of logarithmic mean, which can be obtained from the specified inner diameter and outer diameter, and the number of pipes "n".

Although the boiler type heat recovery device needs to be formed so that it corresponds to the use environment, the heat recovery efficiency depends on the exhaust gas flow rate in the exhaust gas pipe 2, the exhaust gas inlet temperature and the boiling point of the recovered steam. The boiler type heat recovery device can be designed based on the following relation, in the same way with a general heat exchanger.

[formula 1] Q[W] = U[W • m⁻² • K⁻¹] × A[m²] × DT[K]

Here, Q is defined as heat quantity, U is defined as overall heat transfer coefficient, A is defined as heat transfer area, and DT is defined as effective temperature difference.

By setting the exhaust gas composition, inlet gas temperature, and outlet gas temperature, the heat quantity Q for the heat exchange can be calculated using the enthalpy difference between the inlet and the outlet.

Although the overall heat transfer coefficient U depends on the exhaust gas flow rate in the exhaust gas pipe, it can be calculated by the correlation formula U [W • m⁻² • K⁻¹] = 8.2 x flow rate [m/s] + 50 which was obtained from this study. Note that the exhaust gas flow rate at the exhaust gas pipe outlet is within the range of 10m/s to 30m/s.

By obtaining the logarithmic mean temperature of the inlet gas temperature Tin [°C] and the outlet gas temperature Tout [°C] of the exhaust gas and the boiling point Tboil [°C] of the recovered steam, the effective temperature difference DT can be calculated. The heat transfer area A required for Q, U, DT which were obtained before can be calculated by the calculation of Q/U/DT.

Further, in an embodiment wherein the melting step and the deposition step of the VLD method are alternately performed, when the means for reducing the supply amount of chlorosilanes and hydrogen is adopted in the melting step, the heat quantity included in the exhaust gas prominently decreases compared with the deposition step. Therefore, when such exhaust gas flows in the same boiler type heat recovery device with the deposition step, the overall heat transfer coefficient U decreases and thereby the heat recovery efficiency decreases.

Therefore, for the exhaust gas exhausted from the melting step, it is preferable to use additionally provided boiler type heat recovery device corresponding to the heat quantity, for example, having a small cross-sectional area of gas flow passage, by switching from the boiler type heat recovery device used in the deposition step.

With the above boiler type heat recovery device 10, it enables to recover the heat of exhaust gas as steam energy. For the steam exhausted from the steam outlet 6, an overheating treatment is further performed as necessary. Furthermore, such steam may be introduced to a turbine to use for power generation, and also may be used in a carburetor which uses steam as a heat source.

The gas temperature at the exhaust gas pipe outlet of the boiler type heat recovery device 10 is preferably 200°C or more. However, considering the amount of heat recovery and selection of materials for devices configuring processes after the boiler type heat recovery device, it is preferably set to 250 to 450°C, more preferably 300 to 350°C. Therefore, the temperature of the exhaust gas flowing in the boiler type heat recovery device is 200°C or more.

By maintaining the exhaust gas temperature in the boiler type heat recovery device at a predetermined temperature or above, it enables to prevent generation of mists and liquid pools caused by a condensation of polymers in the boiler type heat recovery device. When the outlet gas temperature of the exhaust gas pipe 2 in the boiler type heat recovery device is below 200°C, the liquid pools generate in the boiler type heat recovery device and the silicon fine powders tend to be adhered thereto. With this, it causes a blockage of device and washing is required. When the outlet gas temperature of the exhaust gas pipe 2 of the boiler type heat recovery device is too high, the heat recovery is not efficiently performed. Therefore, the outlet gas temperature of the exhaust gas pipe 2 of the boiler type heat recovery device is monitored by the temperature measuring device. When the outlet gas temperature gets too low, the gas flow rate, the supply amount of cooling medium and the temperature of cooling medium are adjusted and controlled so that the outlet gas temperature is at the predetermined temperature or above.

In the boiler type heat recovery device, water or warm water and the like are supplied as a cooling medium and the cooling medium is brought into contact with the surface of the pipe where the high-temperature exhaust gas flows to recover the heat energy as steam. The heat quantity of sensible heat until the cooling medium is vaporized becomes the loss of the recovered heat quantity. Therefore, although the temperature of the cooling medium supplied in the boiler type heat recovery device is desirably close to the saturation temperature of the steam to be recovered, it is not particularly limited as long as the cooling medium can be supplied in a state of liquid.

In the present invention, with the above heat recovery step, by efficiently recovering the heat energy and exhausting mists containing the silicon fine powers and polymers outside the device by the flow rate, the liquid pools are prevented from remaining in the heat recovery device and the washing frequency of device is reduced, with the result that it enables a long-term continuous operation. For the boiler type heat recovery device, the number of the exhaust gas pipes is large and the structure thereof is complicated. Therefore, although washing is not easily performed, by satisfying the above condition, the washing frequency of device is reduced and production efficiency of polysilicon significantly improves.

### (Exhaust Gas Cooling Step)

Next, the exhaust gas exhausted from the boiler type heat recovery device 10 is cooled by contact with liquid chlorosilane 12. The liquid chlorosilane may be tetrachlorosilane, trichlorosilane, dichlorosilane and the like, and also may be the mixture thereof. Among them, tetrachlorosilane having a higher boiling point is preferable.

By contacting the liquid chlorosilane with the exhaust gas, the unreacted chlorosilanes included in the exhaust gas are recovered in the liquid chlorosilane and the exhaust gas is cooled. Further, in this recovery step, the polymers and the silicon fine powders included in the exhaust gas can also be recovered in the liquid chlorosilane.

By continuously cooling the exhaust gas, the temperature of the liquid chlorosilane increases. Therefore, the liquid chlorosilane 12 is preferably held in a vessel with a cooling means such as a cooling jacket.

### (Recycling of Exhaust Gas)

The exhaust gas after the cooling step includes hydrogen used as raw material gas. Therefore, a known method may be used in order to recover the hydrogen. For example, a hydrogen purification device 30, for cooling the cooled exhaust gas and removing the chlorosilanes included in the exhaust gas, is exemplified. After the purification treatment is appropriately performed, it is preferable to supply the hydrogen to the deposition step to reuse as raw material gas.

Further, for the chlorosilanes recovered by the liquid chlorosilane serving as a cooling medium in the exhaust gas cooling step, it is preferably supplied in the distillation apparatus 40 to remove impurities and thereafter supplied to the deposition step to reuse as raw material gas.

Further, the silicon fine powders and the polymers are preferably separately recovered in the liquid chlorosilane which was recovered in the exhaust gas cooling step and the purification is performed as necessary to reuse as a raw material.

When the raw material gas recovered from such exhaust gas is supplied to the deposition step, a pressurizing means 20 such as various pumps, compressors and the like is used. In the raw material gas recovered through the above step, silicon fine powders and polymers are hardly included, therefore performance of the pumps and compressors will not be impaired. However, if the operation lasts for a long time, adhesion and accumulation of silicon fine powders and polymers might be caused, therefore it is preferable to use a rotary compressor, particularly a screw compressor which is insusceptible to adhesion of such silicon fine powders and polymers.

### EXAMPLES

The followings are explanations of the present invention based on further detailed examples. However, the present invention is not limited to these examples only.

### (Example 1)

In accordance with the process illustrated in the flow of FIG. 1, polysilicon was produced. The deposition step for depositing polysilicon was performed by the VLD method.

A silicon deposition section of the tubular reaction vessel 1 was heated to 1300°C and the raw material gas was supplied therein to deposit the silicon. After that, by heating the tubular reaction vessel to 1600°C and controlling the temperature in the melting step, the deposited silicon was melted and dropped in the tubular reaction vessel and then recovered. The deposition step and the melting step were repeatedly performed to produce silicon.

In the deposition step, as the raw material gas, mixed gas (approximately 2200Nm³/h) of 2000Nm³/h of hydrogen and 1200kg/h (approximately 200Nm³/h) of trichlorosilane as chlorosilanes was supplied to perform a reaction. The temperature of the exhaust gas exhausted from the deposition step was measured, and it was 1050°C. Further, the outlet pressure of the boiler type heat recovery device during the deposition step was adjusted so that it was 50kPaG. Further, 100Nm³/h of tetrachlorosilane was supplied in the gas exhausted from the deposition step, and thereafter the exhaust gas was supplied in the boiler type heat recovery device.

Further, in the melting step, the flow of the above trichlorosilane and hydrogen was stopped and then 10Nm³/h of hydrogen was flowed as diluent gas. Further, the exhaust gas generated from the deposition step and the melting step was supplied in the same boiler type heat recovery device.

The ratio of the length L and the inner diameter D of the gas introduction pipe was set to approximately 2:1, and the ratio of the cross-sectional area of gas flow passage in the boiler type heat recovery device and the cross-sectional area of gas flow passage of the gas introduction pipe was set to approximately 1:4. Further, the inner diameter of the exhaust gas pipe 2 in the boiler type heat recovery device was set to 45mm.

The exhaust gas temperature before and after the boiler type heat recovery device in the deposition step was 950°C and 250°C and the initial pressure difference was approximately 8kPa. The overall heat transfer coefficient U was estimated at 148 W • m⁻² • K⁻¹ .

From the above results, the exhaust gas flow rate at the exhaust gas pipe outlet in the boiler type heat recovery device in the deposition step was 12m/s.

Further, the gas with a temperature of approximately 250°C exhausted from the boiler type heat recovery device was flowed, by blowing the gas, into the liquid chlorosilane 12 of the exhaust gas cooling step 14 wherein the liquid chlorosilane including tetrachlorosilane as a main component is filled. As a result, the temperature of the gas exhausted from the exhaust gas cooling step 14 was cooled to approximately 50°C.

Although the above operation was continued for a month, the pressure difference between before and after the boiler type heat recovery device was unchanged. Further, after the overhaul inspection was carried out on the boiler type heat recovery device, the gas introduction pipe, and also the gas processing system through the exhaust gas cooling step to the hydrogen purification device, generation of mists and adhesion of silicon fine powders were not confirmed, with the result that the device and the pipe could be safely opened.

### (Example 2)

The operation was carried out in the same way as in Example 1, aside from increasing the hydrogen as the raw material gas in the deposition step.

Specifically, in the deposition step, as the raw material gas, mixed gas (approximately 3200Nm³/h) of 3000Nm³/h of hydrogen and 1200kg/h (approximately 200Nm³/h) of trichlorosilane as chlorosilanes was supplied to perform a reaction. Further, the outlet pressure of the boiler type heat recovery device in the deposition step was adjusted so that it was 50kPaG. For the boiler type heat recovery device, the same device was used with Example 1.

The temperature of the exhausted gas exhausted from the deposition step was measured, and it was 1100°C.

The exhaust gas temperature before and after the boiler type heat recovery device in the deposition step was approximately 980°C and 300°C and the initial pressure difference was approximately 10kPa. The overall heat transfer coefficient U was estimated at 206W • m⁻² • K⁻¹.

From the above result, the exhaust gas flow rate at the exhaust gas pipe outlet of the boiler type heat recovery device in the deposition step was 19m/s.

Although the above operation was continued for a month, the pressure difference between before and after the boiler type heat recovery device was unchanged. Further, after the overhaul inspection was carried out on the boiler type heat recovery device, the gas introduction pipe, and also the exhaust gas processing system through the exhaust gas cooling step to the hydrogen purification device, generation of mists and adhesion of silicon fine powders were not confirmed, with the result that the device and the pipe could be safely opened.

### (Example 3)

The operation was carried out in the same way as in Example 1, aside from using the exhaust gas pipe 2 of the boiler type heat recovery device whose total length is about one-third length of that of Example 1 while setting the inner diameter and the number of the pipes the same with Example 1. As a result, the gas temperature at the outlet of the boiler type heat recovery device was approximately 450°C. Further, the exhaust gas flow rate at the exhaust gas pipe outlet in the boiler type heat recovery device in the deposition step was 16m/s.

Although the above operation was continued for a month, the pressure difference between before and after the boiler type heat recovery device was unchanged. Further, after the overhaul inspection was carried out on the boiler type heat recovery device, the gas introduction pipe, and also the exhaust gas processing system through the exhaust gas cooling step to the hydrogen purification device, generation of mists and adhesion of silicon fine powders were not confirmed, with the result that the device and the pipe could be safely opened.

### (Example 4)

The operation was carried out in the same way as in Example 1, aside from replacing the exhaust gas cooling device filled with the liquid chlorosilane with a normal shell and tube type heat exchanger for cooling the gas by use of cooling water with a temperature of approximately 30°C in the exhaust gas cooling step 14 of Example 1.

Although the above operation was continued for a month, the pressure difference between before and after the boiler type heat recovery device was unchanged. However, slight increase of the outlet gas temperature of the heat exchanger, which was due to a temporal decrease of heat exchange capacity of the heat exchanger, could be confirmed. Further, after the one-month operation, although the overhaul inspection was carried out on the boiler type heat recovery device, the gas introduction pipe, and also the exhaust gas processing system through the exhaust gas cooling step to the hydrogen purification device, generation of mists and adhesion of silicon fine powders were not confirmed in the boiler type heat recovery device and the gas introduction pipe, with the result that the device and the pipe could be safely opened. On the other hand, for the exhaust gas processing system which is through the exhaust gas cooling step to the hydrogen purification device, adhesion of liquid materials having high viscosity and silicon powders could be confirmed on the part where the exhaust gas flows in the heat exchanger.

### (Comparative Example 1)

The operation was carried out in the same way as in Example 1, aside from reducing the hydrogen as raw material gas in the deposition step.

Specifically, in the deposition step, as the raw material gas, mixed gas (approximately 1200Nm³/h) of 1000Nm³/h of hydrogen and 1200kg/h (approximately 200Nm³/h) of trichlorosilane as chlorosilanes was supplied to perform a reaction. Further, the outlet pressure of the boiler type heat recovery device in the deposition step was adjusted so that it was 50kPaG.

The exhaust gas temperature before and after the boiler type heat recovery device in the deposition step was approximately 880°C and 150°C, and the initial pressure difference was 5kPa. The overall heat transfer coefficient U was estimated at 93W • m⁻² • K⁻¹.

From the above result, the exhaust gas flow rate at the exhaust gas pipe outlet in the boiler type heat recovery device in the deposition step was 5m/s.

After the above operation was carried out for a week, the pressure difference between before and after the boiler type heat recovery device started to increase and it indicated a rising trend from 5kPa to 15kPa. Further, after the overhaul inspection was carried out on the device, the gas introduction pipe and the exhaust gas processing system, generation of mists and adhesion of silicon fine powders were confirmed and thereby washing was required.

### (Comparative Example 2)

The operation was carried out in the same way as in Example 1, aside from enlarging the inner diameter of the exhaust gas pipe of the boiler type heat recovery device and also enlarging the cross-sectional area of gas flow passage in the heat recovery step.

Specifically, the inner diameter of the exhaust gas pipe 2 was set to 45mm to 70mm. Further, the number of the exhaust gas pipes was adjusted so that the heat transfer area was not changed.

As a result, the exhaust gas temperature before and after the boiler type heat recovery device in the deposition step was approximately 850°C and 320°C, and the initial pressure difference was approximately 4kPa. The overall heat transfer coefficient U was estimated at 115W • m⁻² • K⁻¹.

From the above result, the exhaust gas flow rate at the exhaust gas pipe outlet in the boiler type heat recovery device in the deposition step was 7m/s.

After the above operation was continued for a week, the pressure difference between before and after the boiler type heat recovery device started to increase and it indicated a rising trend from 4kPa to 8kPa. Further, after the overhaul inspection was carried out on the device, the gas introduction pipe and also the exhaust gas processing system, generation of mists and adhesion of silicon fine powders were confirmed and thereby the washing was required.

**[Table 1]**

| Table 1 | Inlet Gas Temperature | Outlet Gas Temperature | Exhaust Gas Flow Rate | Overhaul Inspection Result |
|---|---|---|---|---|
| Ex. 1 | 950°C | 250°C | 12m/s | Good |
| Ex.2 | 980°C | 300°C | 19m/s | Good |
| Ex.3 | 950°C | 450°C | 16m/s | Good |
| Ex.4 | 950°C | 250°C | 12m/s | adhesion was confirmed in the heat exchanger during the exhaust gas cooling step |
| Comp Ex. 1 | 880°C | 150°C | 5m/s | mists and silicon fine powders remained |
| Comp Ex. 2 | 950°C | 320°C | 7m/s | mists and silicon fine powders remained |

### DESCRIPTION OF THE REFERENCE NUMERALS

- 1: tubular reaction vessel
- 2: exhaust gas pipe
- 4: cooling medium supply port
- 6: steam outlet
- 8: gas introduction pipe
- 10: boiler type heat recovery device
- 12: liquid chlorosilane
- 14: exhaust gas cooling step
- 20: pressurizing means
- 30: hydrogen purification device
- 40: distillation apparatus

## Claims

1. A method for producing polysilicon comprising:
a deposition step for depositing polysilicon from raw material gas including chlorosilanes, and
a heat recovery step of supplying exhaust gas generated from the deposition step in a boiler type heat recovery device provided with an exhaust gas pipe and then recovering heat, wherein
a gas temperature at an exhaust gas pipe outlet of the boiler type heat recovery device is set to 200°C or more, and an exhaust gas flow rate at the exhaust gas pipe outlet in the boiler type heat recovery device is adjusted to 10m/second or higher.

2. The method for producing polysilicon as set forth in claim 1 comprising:
an exhaust gas cooling step for cooling the exhaust gas after the heat recovery step by contact with liquid chlorosilane.

3. The method for producing polysilicon as set forth in claim 1 or 2 comprising:
a step of recovering unreacted raw material gas from the exhaust gas after the exhaust gas cooling step and then supplying it to the deposition step.

4. The method for producing polysilicon as set forth in claim 2 comprising:
a step of recovering the unreacted raw material gas from the liquid chlorosilane in the exhaust gas cooling step and then supplying it to the deposition step.

5. The method for producing polysilicon as set forth in any one of claims 1 to 4, wherein
in a pipe for introducing the exhaust gas generated from the deposition step to the heat recovery step, a straight tube type gas introduction pipe is installed before the boiler type heat recovery device, and the ratio (L:D) of a length L and an inner diameter D of the gas introduction pipe is 1:1 to 5:1.

6. The method for producing polysilicon as set forth in claims 1 to 5, wherein
the ratio (A:B) of a cross-sectional area A of gas flow passage of the exhaust gas pipe in the boiler type heat recovery device and a cross-sectional area B of gas flow passage of the gas introduction pipe installed before the boiler type heat recovery device is 1:1.5 to 1:10.

7. The method for producing polysilicon as set forth in any one of claims 1 to 6, wherein
the deposition step is a step for depositing the polysilicon from the raw material gas including chlorosilanes on an internal wall of a tubular reaction vessel, and is further followed by a melting step in which a temperature of the tubular reaction vessel is raised to the melting point or more of silicon to melt a part or all of the deposited silicon and thereby the silicon is dropped and recovered, and the deposition step and the melting step are repeatedly performed.

8. The method for producing polysilicon as set forth in claim 7, wherein
a plurality of the boiler type heat recovery devices having a different cross-sectional area of gas flow passage is arranged in a line, and the exhaust gas exhausted from the deposition step and the melting step is supplied into respective separate boiler type heat recovery devices.

## Amended claims

### Amended claims under Art. 19.1 PCT

**1.** A method for producing polysilicon comprising:
a deposition step for depositing polysilicon from raw material gas including chlorosilanes, and
a heat recovery step of supplying exhaust gas generated from the deposition step in a boiler type heat recovery device provided with an exhaust gas pipe and then recovering heat, wherein
a gas temperature at an exhaust gas pipe outlet of the boiler type heat recovery device is set to 200°C or more, and an exhaust gas flow rate at the exhaust gas pipe outlet in the boiler type heat recovery device is adjusted to 10m/second or higher.

**2.** The method for producing polysilicon as set forth in claim 1 comprising:
an exhaust gas cooling step for cooling the exhaust gas after the heat recovery step by contact with liquid chlorosilane.

**3.** The method for producing polysilicon as set forth in claim 2 comprising:
a step of recovering unreacted raw material gas from the exhaust gas after the exhaust gas cooling step and then supplying it to the deposition step.

**4.** The method for producing polysilicon as set forth in claim 2 comprising:
a step of recovering the unreacted raw material gas from the liquid chlorosilane in the exhaust gas cooling step and then supplying it to the deposition step.

**5.** The method for producing polysilicon as set forth in any one of claims 1 to 4, wherein
in a pipe for introducing the exhaust gas generated from the deposition step to the heat recovery step, a straight tube type gas introduction pipe is installed before the boiler type heat recovery device, and the ratio (L:D) of a length L and an inner diameter D of the gas introduction pipe is 1:1 to 5:1.

**6.** The method for producing polysilicon as set forth in claims 1 to 5, wherein
the ratio (A:B) of a cross-sectional area A of gas flow passage of the exhaust gas pipe in the boiler type heat recovery device and a cross-sectional area B of gas flow passage of the gas introduction pipe installed before the boiler type heat recovery device is 1:1.5 to 1:10.

**7.** The method for producing polysilicon as set forth in any one of claims 1 to 6, wherein
the deposition step is a step for depositing the polysilicon from the raw material gas including chlorosilanes on an internal wall of a tubular reaction vessel, and is further followed by a melting step in which a temperature of the tubular reaction vessel is raised to the melting point or more of silicon to melt a part or all of the deposited silicon and thereby the silicon is dropped and recovered, and the deposition step and the melting step are repeatedly performed.

**8.** The method for producing polysilicon as set forth in claim 7, wherein
a plurality of the boiler type heat recovery devices having a different cross-sectional area of gas flow passage is arranged in a line, and the exhaust gas exhausted from the deposition step and the melting step is supplied into respective separate boiler type heat recovery devices.
